# EUROPEAN PATENT SPECIFICATION

(11) **EP 4 095 332 B1**
(45) Date of publication and mention of the grant of the patent: **08.11.2023**
(21) Application number: 22174636.5
(22) Date of filing: 20.05.2022
(51) Int. Cl.: E04B 1/86, B32B 29/08, D21H 27/40, B32B 7/03, D21H 11/14, B32B 29/00, E04B 1/84

(54) **SOUND-ABSORBING PANEL**
SCHALLABSORBIERENDE PLATTE
PANNEAU D'ABSORPTION ACOUSTIQUE

(30) Priority: 27.05.2021 IT 202100013790
(43) Date of publication of application: 30.11.2022
(73) Proprietor: Polymaxitalia S.r.l., 31033 Castelfranco Veneto (TV) (IT)
(72) Inventor: BONIFAZI, Emanuele, 31033 Castelfranco Veneto (TV) (IT)
(74) Representative: Modiano, Micaela Nadia

(56) References cited:
- WO-A1-2013/136272
- DE-U1- 9 310 221

## Description

The present invention relates to a sound-absorbing panel made of double-wave corrugated cardboard.

Nowadays corrugated cardboard is usually used for making packaging and to a lesser extent for making furnishings, accessories and decorative objects in general.

The basic composition of corrugated cardboard is formed by two liners, a lower liner and a higher liner, and by a layer of corrugated paper glued to the two liners with natural adhesive based on food starch.

A sheet of corrugated cardboard can contain from one to three corrugations, a single corrugation being classified as K-flute, with minimum height 5.0 mm, A-flute, with minimum height 4.5 mm, B-flute, with minimum height 2.5 mm, C-flute, with minimum height 3.5 mm, E-flute, with minimum height 1.2 m and F-flute, with minimum height 0.8 mm.

There are types of corrugated cardboard on the market that are made exclusively from paper or paper mixed with Kraft paper, when the product requires high mechanical characteristics.

In particular, Italian production of double-wave corrugated cardboard is estimated to be 2% of all corrugated cardboard produced and is intended almost exclusively for the packaging industry for the storage and movement of goods.

Single-wave corrugated cardboard is usually used for packaging small products or products that require reduced levels of protection for the product contained.

Triple-wave corrugated cardboard is instead used for specific uses where maximum characteristics of strength and rigidity are required.

Almost all sheets of corrugated paper present on the market furthermore have a wave angle equal to 0 (zero) degrees and the adhesive bonding of the sheets is done crosswise, with the result that it has a perforation of 50%, in the sense that in the superimposed layers of cardboard the various sinusoidal waves are arranged alternately, substantially at 90° to each other.

Document DE 93 10 221 U1 discloses a sound-absorbing panel composed of a series of layers of double wave corrugated cardboard comprising all the features of the preamble of claim 1.

It has been found that the corrugated cardboard used nowadays does not have a sound-absorption function, in particular of aural or of speech perception, given that, from technical tests conducted, such sound absorption is, in view of the intrinsic structure of conventional corrugated cardboard, effectively substantially nil.

The aim of the present invention is to solve the above mentioned technical problems, eliminating the drawbacks in the cited known art, by providing a panel of corrugated cardboard that offers excellent sound-absorption characteristics.

Within this aim, an object of the invention is to provide a panel of corrugated cardboard that at the same time maintains the characteristics of being light, easily stored and transported, and also of being easy to couple to other structures such as, for example, to a wall or to a ceiling.

Another object of the invention is to provide a panel of corrugated cardboard that is structurally simple, that is of low cost and which can be made with the usual conventional plants.

This aim and these and other objects which will become better apparent hereinafter are achieved by a sound-absorbing panel, composed of a series of layers of double-wave corrugated cardboard, each one formed by an upper liner, an upper wave, an intermediate liner, a lower wave, and a lower liner, characterized in that each one of said layers of double-wave corrugated cardboard, of the CC type with a minimum height of 8.5 mm, is made of paper that is resistant to flexing and with recycled paper containing virgin cellulose, each one of said upper and lower waves having a mutually non-aligned sinusoidal wave shape and having an inclination of 15 - 45°.

Further characteristics and advantages of the invention will become better apparent from the detailed description of a particular but not exclusive embodiment thereof, illustrated by way of non-limiting example in the accompanying drawings, wherein:

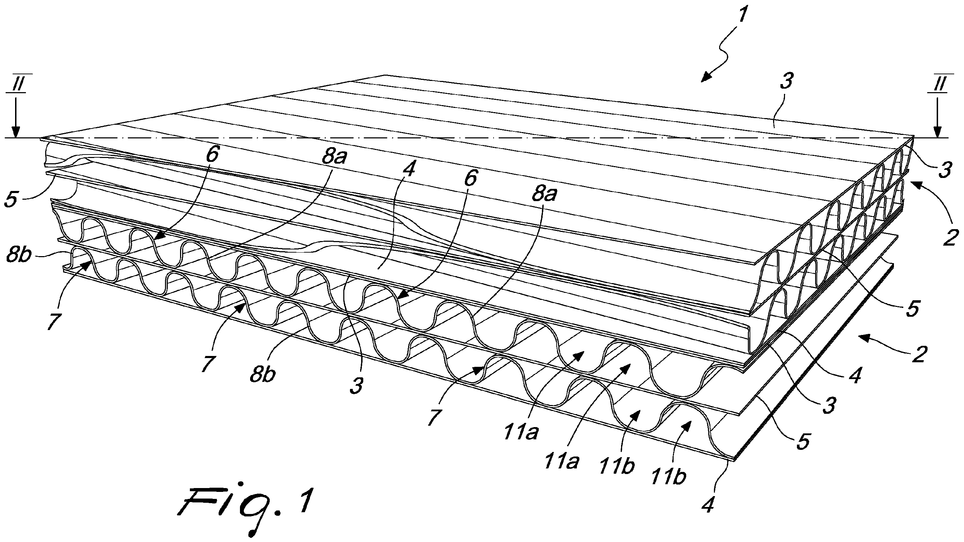

Figure 1 is a perspective view of the panel according to the invention;

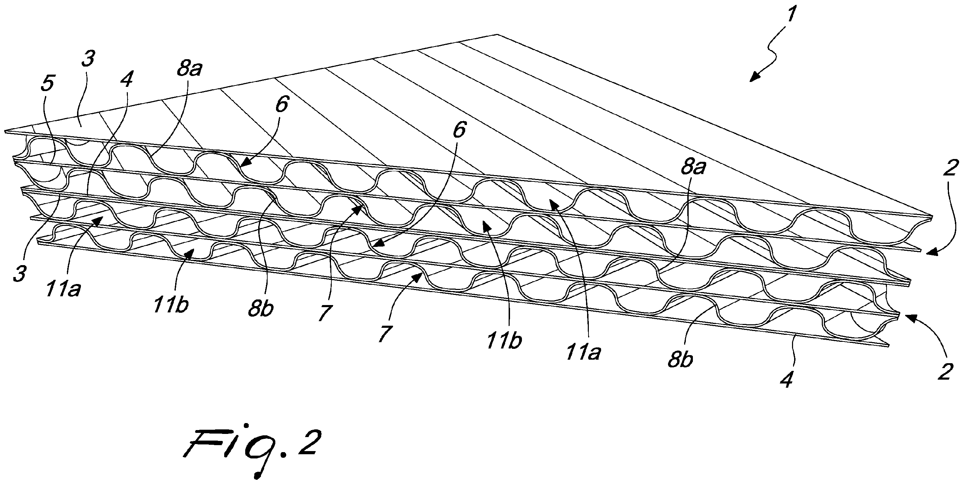

Figure 2 is a cross-sectional view of the panel taken along the line II-II of Figure 1;

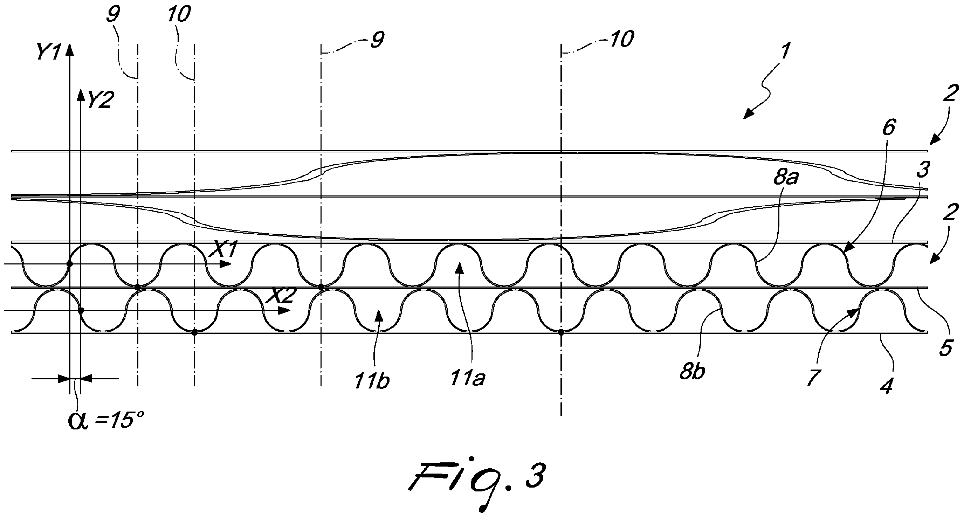

Figure 3 is a side view of the panel.

In the exemplary embodiments that follow, individual characteristics, given in relation to specific examples, may actually be interchanged with other, different characteristics that exist in other exemplary embodiments.

Moreover, it should be noted that anything found to be already known during the patenting process is understood not to be claimed and to be the subject of a disclaimer.

With reference to the figures, the reference numeral 1 generally designates a sound-absorbing panel made using cardboard made of paper that is resistant to flexing, of the Kraft paper type, and recycled paper containing virgin cellulose.

Acoustic absorption (sound insulation or sound absorption) is the capacity of a material to dissipate sound energy by converting it to heat.

Recycled paper containing virgin cellulose, of which each wave is made, is a material that, by virtue of its roughness and its elasticity, makes it possible to also take advantage of dissipation deriving from friction and from vibration of the vertical walls of the waves, thus increasing the overall sound absorption of the panel.

The cardboard contains preferably 30% recycled paper and 70% virgin cellulose.

The panel 1 is made of multiple individual layers 2, mutually superimposed according to an arrangement that is alternated by 90°, of double-wave corrugated cardboard of the CC type with minimum height of 8.5 mm.

In the sector, by convention for example in supply specifications between suppliers and customers, the term "double-wave corrugated cardboard of type CC" is used to indicate a double-wave corrugated cardboard in which there are, for each layer, an upper liner of flat paper, a lower liner of flat paper, and an intermediate liner of flat paper between which there are a continuous upper wave and a continuous lower wave, the upper wave and the lower wave each having a sinusoidal wave shape that is, in each individual layer, identical in terms of dimensions but slightly axially shifted (i.e. not in phase).

There are therefore, for each layer 2, an upper liner 3 of flat paper, a lower liner 4 of flat paper, and an intermediate liner 5 of flat paper, between which there are a continuous upper wave 6 and a continuous lower wave 7.

The upper wave 6 and the lower wave 7 each have a sinusoidal wave shape 8a, 8b which is, in each individual layer 2, identical in terms of dimensions but slightly axially shifted (i.e. not in phase).

Each sinusoidal wave 8a, 8b has the chosen breadth (understood as dilation along the Y1, Y2 axis) and the chosen pulsation (understood as dilation along the X1, X2 axis) as a function of specific requirements.

The choice of the breadth and of the pulsation make it possible, on the basis of specific requirements, to dissipate more energy at low frequencies and therefore in the absorption range in which most conventional sound-absorbing panels have evident limitations.

The individual sinusoidal waves 8a, 8b that constitute the upper wave 6 and the lower wave 7 are therefore mutually non-aligned (i.e. not in phase), in the sense that the sinusoidal curve 8a of the upper wave 6 is offset by a chosen degree with respect to the underlying sinusoidal curve 8b of the lower wave 7.

This is highlighted in the accompanying figures, where 9 indicates a first axis that passes through a point X1=270° of the upper sinusoidal wave 6 and 10 indicates a second axis that passes through a point X2=270° of the lower sinusoidal wave 7, where the origin of X1 is slightly offset with respect to the origin of X2.

In this manner, the area of incidence of the sound wave is asymmetrical and nonlinear.

This offsetting contributes to linearizing the noise absorption curve, thus preventing performance drops at sensitive frequencies, particularly speech frequencies, drops which are present in a single- and triple-wave corrugated cardboard.

The individual sinusoidal waves 8a, 8b of the upper wave 6 and of the lower wave 7 which constitute each individual layer 2 of the panel 1 are furthermore all oriented in the same direction, in the sense that, seen from the front, the panel shows the sinusoidal curves 8a of the upper wave 6 and the sinusoidal curves 8b of the lower wave 7 exposed.

Said differently, the sinusoidal curves 8a, 8b of the upper wave 6 and of the lower wave 7 which constitute each individual layer 2 are arranged so as to form separate hollow channels 11a, 11b which are aligned along the same longitudinal axis.

The individual waves 8a, 8b of the upper wave 6 and of the lower wave 7 which constitute each individual layer 2 are shifted out of phase, in a first illustrated embodiment, by an angle α (alpha) equal to 15 degrees.

In a second illustrated embodiment, the individual waves 8 of the upper wave 5 and of the lower wave 6 are shifted out of phase by an angle α (alpha) equal to 45 degrees.

The angle α (alpha) can vary between 15 and 45°.

The choice to define a chosen angle for the incidence of the sound makes it possible to prevent a mirror-symmetrical reflection of the signal incident on the panel 1.

The chosen offsets enable the panel 1 to obtain a linear acoustic response that is similar to that of conventional sound-absorbent panels present on the market such as slats, with broader frequency and higher (close to one) than conventional sound-absorbent panels present on the market such as micro-perforated wooden slats coupled with synthetic fibers, rock wool, glass wool and polyester fibers.

This result has been verified using instrumental measurements made at a technical physics laboratory for example with a special apparatus called Kundt's tube which makes it possible to qualitatively determine, and for comparative purposes, the amount of sound energy absorbed by the sample of material over the entire range of frequencies that can be heard by the human ear.

The indicated offsets of 15° and 45° illustrated for preference in the accompanying figures are the ones that experimentally have a more linear response and a higher acoustic absorption across a broader frequency range.

It should be noted in any case that the two offsets of 15° and 45° are shown only by way of example, it being understood that protection is requested for values of α (alpha) comprised between these two extremes.

Thus it has been found that the invention fully achieves the intended aim and objects, a sound-absorbing panel made of double-wave corrugated cardboard having been obtained the use of which has shown that its particular structure makes it possible, by virtue also of the wave dimensions and the percentage of perforation, to absorb sound waves not according to the resonator principle, like almost all the micro-perforated materials present on the market, such as plasterboard, plaster, sheet metal, mineral fibers, wooden slats, but by taking advantage of the law of dissipation by porosity.

In absorption by porosity, the acoustic absorption is due to the phenomenon of viscosity: dissipation of the sound wave occurs via conversion of the sound to kinetic energy when it passes through the material, and the sound-absorbing capacity is influenced by the density and thickness of the latter.

The use therefore of double-wave corrugated cardboard of the CC type with a minimum height of 8.5 mm made of flexing-resistant paper and recycled paper containing virgin cellulose and with identical sinusoidal wave shapes, shifted out of phase or mutually non-aligned, all oriented in the same direction and each one having an offset comprised between 15 and 45 degrees makes it possible to achieve an acoustic absorption wherein the dissipation of the sound wave occurs via conversion of the sound to kinetic energy when it passes through the material, and the sound-absorbing capacity is influenced and improved by virtue of the particular structural shape adopted for the panel.

The micro-perforated materials present on the market absorb noise selectively at a specific frequency, usually outside the range of frequencies of speech, while the panel that is the subject matter of the present application has an acoustic absorption distributed over the whole spectrum of interest of aural perception, thus enabling its structure to make it more effective, more versatile, better implementable in designs and certainly simpler to apply.

The panel thus obtained makes it possible, once installed for example on a wall or ceiling, to provide an immediate perception of lowering the reverberation in the environment in which it has been installed, together with an immediate improvement in clarity of communication and in the intelligibility of oral messages, while avoiding use of the addition of fibrous materials as happens in the known art, for example for micro-perforated wood coverings.

Naturally the materials used as well as the dimensions of the individual components of the device according to the invention may be more relevant according to specific requirements and to the state of the art.

The characteristics indicated above as advantageous, convenient or the like, may also be missing or be substituted by equivalent characteristics.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A sound-absorbing panel (1), composed of a series of layers (2) of double-wave corrugated cardboard (CC), each one formed by an upper liner (3), an upper wave (6), an intermediate liner (5), a lower wave (7), and a lower liner (4), wherein
each one of said layers (2) of double-wave corrugated cardboard, of the CC type with a minimum height of 8.5 mm, is made of paper that is resistant to flexing and with recycled paper containing virgin cellulose, **characterized in that**
each one of said upper and lower waves (6, 7) having a mutually non-aligned sinusoidal wave shape (8a, 8b) and having an inclination of between 15 and 45°.

2. The sound-absorbing panel (1) according to claim 1, **characterized in that** said individual layers (2) are mutually superimposed according to an arrangement that is alternated by 90°, said upper wave (6) and said lower wave (7) each having a sinusoidal wave shape (8a, 8b) that is identical in both layers in terms of dimensions but is slightly axially shifted or offset.

3. The sound-absorbing panel (1) according to one or both of the preceding claims, **characterized in that** said sinusoidal waves (8a, 8b) have the chosen breadth (understood as dilation along the Y1, Y2 axis) and the chosen pulsation (understood as dilation along the X1, X2 axis) as a function of specific requirements in order to dissipate more energy at low frequencies.

4. The sound-absorbing panel (1) according to one or more of the preceding claims, **characterized in that** said individual sinusoidal waves (8a, 8b) that constitute said upper wave (6) and said lower wave (7) are mutually non-aligned or offset, said sinusoidal curve (8a) of said upper wave (6) being offset by a chosen degree α (alpha) with respect to said underlying sinusoidal curve (8b) of said lower wave (7).

5. The sound-absorbing panel (1) according to one or more of the preceding claims, **characterized in that** the area of incidence of a sound wave on said sound-absorbing panel (1) is asymmetrical and nonlinear.

6. The sound-absorbing panel (1) according to one or more of the preceding claims, **characterized in that** the non-alignment of said upper wave (6) and said lower wave (7) contributes to linearizing the noise absorption curve, thus preventing performance drops at sensitive frequencies, particularly speech frequencies.

7. The sound-absorbing panel (1) according to one or more of the preceding claims, **characterized in that** said individual sinusoidal waves (8a, 8b) of said upper wave (6) and said lower wave (7) which constitute each one of said individual layers (2) are all oriented in the same direction, in a frontal view said sound-absorbing panel (1) presenting said sinusoidal curves (8a) of said upper wave (6) and said sinusoidal waves (8b) of said lower wave (7) exposed.

8. The sound-absorbing panel (1) according to one or more of the preceding claims, **characterized in that** said sinusoidal curves (8a, 8b) of said upper wave (6) and of said lower wave (7) which constitute each one of said individual layers (2) are arranged so as to form separate hollow channels (11a, 11b) which are aligned along the same longitudinal axis.

9. The sound-absorbing panel (1) according to claim 1, **characterized in that** each one of said waves (8a, 8b) of said upper wave (6) and said lower wave (7) which constitute each one of said individual layers (2) has an offset by an angle α (alpha) of 15 degrees.

10. The sound-absorbing panel (1) according to claim 1, **characterized in that** each one of said waves (8a, 8b) of said upper wave (6) and said lower wave (7) which constitute each one of said individual layers (2) has an offset by an angle α (alpha) of 45 degrees.

11. The sound-absorbing panel (1) according to one or more of the preceding claims, **characterized in that** said cardboard contains 30% recycled paper and 70% virgin cellulose.

12. The sound-absorbing panel (1) according to one or more of the preceding claims, **characterized in that** it has a front surface with a void-to-full ratio of 50% with a perforation percentage comprised between 85-90%.

## Patentansprüche

1. Eine schallabsorbierende Platte (1), bestehend aus einer Reihe von Schichten (2) zweiwelliger Wellpappe (corrugated cardboard, CC), jeweils bestehend aus einer oberen Schicht (3), einer oberen Welle (6), einer intermediären Schicht (5), einer unteren Welle (7) und einer unteren Schicht (4), wobei jede der Schichten (2) zweiwelliger Wellpappe vom CC-Typ mit einer Mindesthöhe von 8,5 mm aus Papier hergestellt ist, das biegefest ist, und mit recyceltem Papier, das reine Zellulose enthält; **dadurch gekennzeichnet, dass** jede der oberen und unteren Wellen (6, 7) eine miteinander nicht ausgerichtete Sinuswellenform (8a, 8b) und eine Neigung zwischen 15 und 45° hat.

2. Die schallabsorbierende Platte (1) gemäß Anspruch 1, **dadurch gekennzeichnet, dass** die einzelnen Schichten (2) in einer Anordnung, die um 90° alterniert, übereinander liegen, wobei die obere Welle (6) und die untere Welle (7) jeweils eine Sinuswellenform (8a, 8b) haben, die in beiden Schichten in Bezug auf Abmessungen identisch, aber axial leicht verschoben oder versetzt ist.

3. Die schallabsorbierende Platte (1) gemäß einem oder beiden der obigen Ansprüche, **dadurch gekennzeichnet, dass** die Sinuswellen (8a, 8b) die gewählte Breite (d. h. Ausdehnung entlang der Y1, Y2-Achse) und die gewählte Kreisfrequenz (d. h. Ausdehnung entlang der X1, X2-Achse) als Funktion spezifischer Anforderungen haben, um bei niedrigen Frequenzen mehr Energie abzuleiten.

4. Die schallabsorbierende Platte (1) gemäß einem oder mehreren der obigen Ansprüche, **dadurch gekennzeichnet, dass** die einzelnen Sinuswellen (8a, 8b), welche die obere Welle (6) und die untere Welle (7) bilden, miteinander nicht ausgerichtet oder versetzt sind, wobei die Sinuskurve (8a) der oberen Welle (6) in einem gewünschten Grad α (alpha) zu der darunter liegenden Sinuskurve (8b) der unteren Welle (7) versetzt ist.

5. Die schallabsorbierende Platte (1) gemäß einem oder mehreren der obigen Ansprüche, **dadurch gekennzeichnet, dass** der Einfallsbereich einer Schallwelle auf die schallabsorbierende Platte (1) asymmetrisch und nichtlinear ist.

6. Die schallabsorbierende Platte (1) gemäß einem oder mehreren der obigen Ansprüche, **dadurch gekennzeichnet, dass** die fehlende Ausrichtung der oberen Welle (6) und der unteren Welle (7) zur Linearisierung der Schallabsorptionskurve beiträgt und dadurch Leistungsabfall bei empfindlichen Frequenzen, insbesondere Sprachfrequenzen, verhindert.

7. Die schallabsorbierende Platte (1) gemäß einem oder mehreren der obigen Ansprüche, **dadurch gekennzeichnet, dass** die einzelnen Sinuswellen (8a, 8b) der oberen Welle (6) und der unteren Welle (7), welche jede der einzelnen Schichten (2) bilden, alle in derselben Richtung ausgerichtet sind, wobei die schallabsorbierende Platte (1) in einer Vorderansicht die Sinuskurven (8a) der oberen Welle (6) und die Sinuskurven (8b) der unteren Welle (7) frei liegend präsentiert.

8. Die schallabsorbierende Platte (1) gemäß einem oder mehreren der obigen Ansprüche, **dadurch gekennzeichnet, dass** die Sinuskurven (8a, 8b) der oberen Welle (6) und der unteren Welle (7), die jede der einzelnen Schichten (2) bilden, angeordnet sind, um separate hohle Kanäle (11a, 11b) zu bilden, die entlang derselben Längsachse ausgerichtet sind.

9. Die schallabsorbierende Platte (1) gemäß Anspruch 1, **dadurch gekennzeichnet, dass** jede der Wellen (8a, 8b) der oberen Welle (6) und der unteren Welle (7), die jede der einzelnen Schichten (2) bilden, einen Versatz in einem Winkel α (alpha) von 15 Grad hat.

10. Die schallabsorbierende Platte (1) gemäß Anspruch 1, **dadurch gekennzeichnet, dass** jede der Wellen (8a, 8b) der oberen Welle (6) und der unteren Welle (7), die jede der einzelnen Schichten (2) bilden, einen Versatz in einem Winkel α (alpha) von 45 Grad hat.

11. Die schallabsorbierende Platte (1) gemäß einem oder mehreren der obigen Ansprüche, **dadurch gekennzeichnet, dass** die Pappe 30% recyceltes Papier und 70% reine Zellulose enthält.

12. Die schallabsorbierende Platte (1) gemäß einem oder mehreren der obigen Ansprüche, **dadurch gekennzeichnet, dass** sie eine Vorderfläche mit einer Porenziffer von 50% mit einem Lochungsgrad zwischen 85-90% hat.

## Revendications

1. Panneau d'absorption sonore (1), composé d'une série de couches (2) de carton ondulé à onde double (CC), chacune formée d'une doublure supérieure (3), d'une onde supérieure (6), d'une doublure intermédiaire (5), d'une onde inférieure (7), et d'une doublure inférieure (4), dans lequel chacune desdites couches (2) de carton ondulé à onde double, du type CC avec une hauteur minimale de 8,5 mm, est constituée de papier qui est résistant à la flexion et avec du papier recyclé contenant de la cellulose vierge, **caractérisé en ce que** chacune desdites ondes supérieure et inférieure (6, 7) ayant une forme d'onde sinusoïdale mutuellement non alignée (8a, 8b) et ayant une inclinaison comprise entre 15 et 45°.

2. Panneau d'absorption sonore (1) selon la revendication 1, **caractérisé en ce que** lesdites couches individuelles (2) sont mutuellement superposées selon un agencement qui est alterné à 90°, ladite onde supérieure (6) et ladite onde inférieure (7) ayant chacune une forme d'onde sinusoïdale (8a, 8b) qui est identique dans les deux couches en termes de dimensions, mais est légèrement déplacée ou décalée axialement.

3. Panneau d'absorption sonore (1) selon l'une ou les deux revendications précédentes, **caractérisé en ce que** lesdites ondes sinusoïdales (8a, 8b) ont la largeur choisie (entendue comme une dilatation le long de l'axe Y1, Y2) et la pulsation choisie (entendue comme une dilatation le long de l'axe X1, X2) en fonction d'exigences spécifiques afin de dissiper plus d'énergie à des fréquences basses.

4. Panneau d'absorption sonore (1) selon une ou plusieurs des revendications précédentes, **caractérisé en ce que** lesdites ondes sinusoïdales individuelles (8a, 8b) qui constituent ladite onde supérieure (6) et ladite onde inférieure (7) sont mutuellement non alignées ou décalées, ladite courbe sinusoïdale (8a) de ladite onde supérieure (6) étant décalée d'un degré α (alpha) choisi par rapport à ladite courbe sinusoïdale sous-jacente (8b) de ladite onde inférieure (7).

5. Panneau d'absorption sonore (1) selon une ou plusieurs des revendications précédentes, **caractérisé en ce que** l'aire d'incidence d'une onde sonore sur ledit panneau d'absorption sonore (1) est asymétrique et non linéaire.

6. Panneau d'absorption sonore (1) selon une ou plusieurs des revendications précédentes, **caractérisé en ce que** le non-alignement de ladite onde supérieure (6) et ladite onde inférieure (7) contribue à la linéarisation de la courbe d'absorption de bruit, de façon à éviter les chutes de performance à des fréquences sensibles, en particulier aux fréquences de la parole.

7. Panneau d'absorption sonore (1) selon une ou plusieurs des revendications précédentes, **caractérisé en ce que** lesdites ondes sinusoïdales individuelles (8a, 8b) de ladite onde supérieure (6) et ladite onde inférieure (7) qui constituent chacune desdites couches individuelles (2) sont toutes orientées dans la même direction, dans une vue frontale, ledit panneau d'absorption sonore (1) présentant lesdites courbes sinusoïdales (8a) de ladite onde supérieure (6) et lesdites ondes sinusoïdales (8b) de ladite onde inférieure (7) exposées.

8. Panneau d'absorption sonore (1) selon une ou plusieurs des revendications précédentes, **caractérisé en ce que** lesdites courbes sinusoïdales (8a, 8b) de ladite onde supérieure (6) et de ladite onde inférieure (7) qui constituent chacune desdites couches individuelles (2) sont agencées de façon à former des canaux creux séparés (11a, 11b) qui sont alignés le long du même axe longitudinal.

9. Panneau d'absorption sonore (1) selon la revendication 1, **caractérisé en ce que** chacune desdites ondes (8a, 8b) de ladite onde supérieure (6) et ladite onde inférieure (7) qui constituent chacune desdites couches individuelles (2) présente un décalage d'un angle α (alpha) de 15 degrés.

10. Panneau d'absorption sonore (1) selon la revendication 1, **caractérisé en ce que** chacune desdites ondes (8a, 8b) de ladite onde supérieure (6) et ladite onde inférieure (7) qui constituent chacune desdites couches individuelles (2) présente un décalage d'un angle α (alpha) de 45 degrés.

11. Panneau d'absorption sonore (1) selon une ou plusieurs des revendications précédentes, **caractérisé en ce que** ledit carton contient 30 % de papier recyclé et 70 % de cellulose vierge.

12. Panneau d'absorption sonore (1) selon une ou plusieurs des revendications précédentes, **caractérisé en ce qu'**il a une surface avant avec un rapport vide-plein de 50 % avec un pourcentage de perforation compris entre 85 et 90 %.
